# EUROPÄISCHE PATENTANMELDUNG

(11) **EP 0 635 538 A2**
(43) Veröffentlichungstag der Anmeldung: **25.01.1995**
(21) Anmeldenummer: 94110620.5
(22) Anmeldetag: 07.07.1994
(51) Int. Cl.: C08K 5/00, C08L 29/14

(54) **Polyvinylbutyralfolien mit verbesserten optischen Eigenschaften**

(30) Priorität: 19.07.1993 DE 4324167
(71) Anmelder: HOECHST AKTIENGESELLSCHAFT, D-65926 Frankfurt am Main (DE)
(72) Erfinder: Gutweiler, Matthias, Dr., D-65232 Taunusstein (DE)

(57) **Zusammenfassung**

Herstellung von plastifizierten Polyvinylbutyralfolien mit verbesserten optischen Eigenschaften und verminderter Gelbfärbung durch Vermischen von Polyvinylbutyral (PVB) und Weichmacher, in dem eine wirksame Menge eines optischen Aufhellers gelöst oder suspendiert ist, und gegebenenfalls weiteren Zusatzstoffen und Hilfsmitteln, Plastifizieren des Gemisches und thermoplastische Formung, vorzugsweise durch Extrusion oder Kalandrierung, vorzugsweise zu Flachfolien mit einer Dicke von 0,2 bis 2 mm, insbesondere 0,3 bis 0,8 mm. Verwendung der Flachfolien als Zwischenlagenfolien bei der Herstellung von Mehrschicht-Verbundglasscheiben, vorzugsweise silikatischen Scheiben.

## Beschreibung

Gegenstand der Erfindung sind für die Herstellung von Verbundsicherheitsglasscheiben geeignete plastifizierte Polyvinylbutyralfolien, die durch Gehalte an optischen Aufhellern eine verminderte Gelbfärbung aufweisen.

Weichmacher-haltige Polyvinylbutyrale werden bekanntlich seit langem in großen Mengen thermoplastisch verarbeitet und insbesondere zu Folien extrudiert, die sich u.a. durch hervorragende mechanische Eigenschaften auszeichnen und als Zwischenschichten in mehrschichtigen Verbundgläsern, vorzugsweise für Fahrzeugglasscheiben, Architekturgläser für den Bausektor und Panzerglasscheiben Verwendung finden.

Ein Nachteil der Polyvinylbutyrale (PVB-e) ist ihre, im Vergleich zu anderen technisch verwendbaren Polymerisaten, hohe Oxydationsempfindlichkeit, insbesondere in der Wärme, sowie ihre Unbeständigkeit bzw. Hydrolyseempfindlichkeit gegenüber Säuren. Zweckmäßigerweise werden PVB-e daher vor oder während ihrer, vorzugsweise thermoplastischen, Verarbeitung durch Zugabe von Antioxydantien, vorzugsweise Phenolen, stabilisiert und außerdem zur Verhinderung einer sauren Hydrolyse mit einer geringen Menge Alkalihydroxid versetzt.

Da Folien aus plastifizierten Polyvinylbutyralen häufig eine zu starke Haftung an anorganischen Gläsern aufweisen, können dem PVB zur Herabsetzung dieser Haftungsfähigkeit vor oder bei der Herstellung der Folien haftungsvermindernde Substanzen, beispielsweise alkalisch reagierende Salze, wie Kaliumacetat, zugesetzt werden. Der Zusatz solcher alkalisch reagierender Antihaftmittel sowie die bei der Extrusion anzuwendenden hohen Massetemperaturen von im allgemeinen
> 180°C können aber bekanntlich zu erheblich verfärbten plastifizierten PVB-Folien führen.

Es sind daher bereits zahlreiche Versuche und Maßnahmen bekannt geworden, die eine Verminderung der Verfärbungen von PVB-Folien zum Ziel hatten. So ist aus US-A 3 823 113 die zusätzliche Stabilisierung von PVB durch ein Benzotriazolderivat bekannt. In der DE-C 33 47 040 und der DE-A 32 28 076 sind die Verwendung einer Kombination aus einem phenolischen Antioxydans und einem Phosphit für die PVB-Stabilisierung beschrieben. Es hat sich jedoch gezeigt, daß auch mit den in den vorstehend genannten Druckschriften beschriebenen Methoden nur geringe oder unbefriedigende Stabilisierungsresultate erzielt werden können. Insbesondere die PVB-Stabilisierung mit Phosphit kann unter Langzeitbedingungen problematisch sein. Bekanntlich neigen Phosphite unter Einwirkung von Alkali zur Hydrolyse und damit zur Freisetzung von phosphoriger Säure, die dann zum Abbau des PVB-s führen beziehungsweise zu dessen Abbau beitragen kann.

In EP-A 0 568 999 ist die Stabilisierung von PVB-en mit speziellen mehrkernigen Phenolen sowie die Kombination dieser Phenole mit synergistisch wirkenden Stickstoff-, Schwefel- oder Phosphor-haltigen Costabilisatoren beschrieben. Die thermoplastische Verarbeitung dieser PVB-e führt zu Verbundfolien, die gegenüber bisher bekannten PVB-en eine deutlich verminderte Gelbfärbung aufweisen. Die so hergestellten Verbundfolien stellen zwar eine deutliche Verbesserung des Standes der Technik dar, für viele Anwendungen, speziell bei Mehrfachverbunden für Panzergläser, werden jedoch noch höhere Anforderungen an die optischen Eigenschaften der Folie gestellt.

Der vorliegenden Erfindung lag somit die Aufgabe zugrunde, Polyvinylbutyralfolien verfügbar zu machen, die gegenüber dem Stand der Technik verminderte Gelbwerte aufweisen.

Überraschenderweise wurde nun gefunden, daß der Zusatz von optischen Aufhellern zu plastifizierten PVB-Extrusionsformmassen und deren thermoplastische Formung zu Flachfolien Verbundfolien ergibt, die im fertigen Glasverbund deutlich verminderte Gelbfärbungen, also einen höheren Weißgrad, besitzen, der für ihre Verwendung in silikatischen Sicherheitsverbundglasscheiben besonders wichtig und vorteilhaft ist. Der zu beobachtende positive Einfluß der optischen Aufheller auf die optischen Eigenschaften der erfindungsgemäßen Polyvinylbutyralverbundfolien und der daraus hergestellten Glasscheibenverbunde ist umso erstaunlicher, als bekannterweise silikatische Gläser eine hohe UV-Absorption aufweisen, die der Fluoreszenzwirkung der optischen Aufheller entgegenwirkt.

Gegenstand der vorliegenden Erindung sind also plastifizierte Polyvinylbutyralfolien mit verbesserten optischen Eigenschaften und verminderter Gelbfärbung aus Weichmacher-haltigen Polyvinylbutyralen (PVB-en), die eine wirksame Menge an optischen Aufhellern enthalten und die gegebenenfalls zusätzlich Oxidationsstabilisatoren, Lichtschutzstabilisatoren, Antihaftmittel und Hydrolyseinhibitoren enthalten.

Prinzipiell können erfindungsgemäß als Gelbfärbungsverminderer in Polyvinylbutyralfolien alle bekannten und handelsüblichen optischen Aufheller verwendet werden.

Optische Aufheller sind bekanntlich organische Substanzen, die Systeme von konjugierten Doppelbindungen oder Mehrfachbindungen, in die auch Heteroatome einbezogen sein können, enthalten und Fluoreszenzeigenschaften besitzen. Dabei absorbieren die Moleküle bei Belichtung nichtsichtbares ultraviolettes Licht (bis 380 nm) und emittieren sichtbares blaues Licht (ca. 450 nm). Optische Aufheller werden überall dort verwendet, wo durch Absorption von kurzwelligem sichtbarem Licht an oder in einem Substrat ein störender Gelbstich in der Farbe des Substrats verursacht wird. Die bläuliche Fluoreszenz-Emission eines optischen Aufhellers sorgt dafür, daß der von dem Substrat absorbierte und im reflektierten Licht des gelblichen Substrats damit fehlende Blauanteil ergänzt wird, so daß sich ein strahlend weißes Material ergibt. Überdosierungen der optischen Aufheller führen häufig zu Blaustichigkeit des Materials.

Optische Aufheller werden daher bisher vor allem für Textilien, in Waschmitteln und für Papier verwendet.

Die wichtigsten optischen Aufheller sind Derivate von Stilben, Cumarin, 1,3-Diphenylpyrazolin, Naphthalimid und Benzoxazol. Bevorzugt werden als optische Aufheller in den erfindungsgemäßen plastifizierten Polyvinylbutyralfolien Stilben- und Benzoxazol-Derivate verwendet. Bevorzugte handlsübliche optische Aufheller sind beispielsweise Dinatrium-4(2H-naphtho[1,2-d]triazol-2-yl)stilben-2-sulfonat und Dinatrium-4,4'-bis(4-anilino-6-morpholino-S-triazin-2-ylamino)-2,2-'stilbendisulfonat. Bevorzugte handelsübliche optische Aufheller sind beispielsweise ®Blankophor PSG (Stilben-Derivat) der Fa. Bayer AG, ®Uvitex FP (Stilben-Derivat) und ®Uvitex OB (Benzoxazol-Derivat) der Fa. Ciba-Geigy AG. Die optischen Aufheller werden dem PVB, vorzugsweise im Weichmacher gelöst, gegebenenfalls im Weichmacher suspendiert, vorzugsweise vor oder bei der Plastifizierung bzw. bei der Extrusion zugesetzt, wobei die Vermischung der optischen Aufheller/Weichmacherlösung mit dem PVB vor dem Eintritt in den Extruder oder im Schneckengang des Extruders erfolgen kann.

Die erfindungsgemäßen Poylvinylbutyralverbundfolien können außerdem noch weitere übliche Lichtstabilisatoren in üblichen Mengen, vorzugsweise UV-Stabilsatoren, insbesondere Benzotriazolderivate, sowie weitere übliche Antihaftmittel und übliche Zusatzstoffe enthalten, die dem PVB in üblicher Weise beigemischt werden.

Die Einsatzmenge der optischen Aufheller in den erfindungsgemäßen Poylvinylbutyralverbundfolien beträgt vorzugsweise 0,00001 bis 0,1 Gew.-%, insbesondere 0,0001 bis 0,05 Gew.-%, bezogen auf das PVB-/Weichmacher-Gemisch.

Mit diesen Gehalten an optischen Aufhellern sind die erfindungsgemäßen plastifizierten Polyvinylbutyralverbundfolien vergleichbaren nichterfindungsgemäßen plastifizierten Polyvinylbutyralverbundfolien des Standes der Technik deutlich überlegen und führen insbesondere zu Verbundfolien mit vergleichsweise stark verminderten Gelbfärbungen und deutlich verbesserter optischer Qualität und optischer Transluzenz.

Grundsätzlich können die optischen Aufheller allen Polyvinylbutyraltypen zugesetzt werden, die sich in plastifizierter Form durch thermoplastische Extrusion zu plastifizierten transluzenten PVB-Flachfolien verarbeiten lassen. Die hierfür vorzugsweise geeigneten Polyvinylbutyrale besitzen einen Gehalt an Vinylalkoholmonomereinheiten von vorzugsweise 17 bis 29 Gew.-%, insbesondere 18,5 bis 24 Gew.-%, besonders bevorzugt 19 bis 22 Gew.-%, bezogen auf das PVB. Die Viskosität der 5 Gew.-%igen ethanolischen Lösungen der PVB-e (gemessen nach DIN 53015) bei 23 °C beträgt vorzugsweise 10 bis 200 mPa·s, insbesondere 50 bis 100 mPa·s.

Als Weichmacher können alle mit Polyvinylbutyral verträglichen und für dessen Plastifizierung geeigneten bekannten Weichmacher oder Weichmachergemische verwendet werden. Eine Aufstellung von handelsüblichen Weichmachern, die Angaben über die Verträglichkeit mit Polyvinylbutyral enthält, kann beispielsweise der Druckschrift Modern Plastics Encyclopedia 1981/1982, Seiten 710 bis 719, entnommen werden. Bevorzugte Weichmacher sind beispielsweise die Diester von aliphatischen Diolen, insbesondere von aliphatischen Polyetherdiolen bzw. Polyetherpolyolen, mit aliphatischen Carbonsäuren, vorzugsweise Diester von Polyalkylenoxiden, insbesondere Diester des Di-, Tri- und Tetraethylenglykols mit aliphatischen (C₆-C₁₀)-Carbonsäuren, vorzugsweise 2-Ethylbuttersäure und n-Heptansäure, ferner Diester von aliphatischen oder aromatischen (C₂-C₁₈)-Dicarbonsäuren, vorzugsweise Adipin-, Sebazin- und Phthalsäure, mit aliphatischen (C₄-C₁₂)-Alkoholen, vorzugsweise Dihexyladipat.

Die Weichmacher werden zur Plastifizierung von PVB in üblichen Mengen eingesetzt, die vorzugsweise im Bereich von 20 bis 50 Gew.-%, insbesondere 23 bis 30 Gew.-%, bezogen auf das PVB-/Weichmacher-Gemisch, liegen können.

Die unter Zusatz von optischen Aufhellern plastifizierten Polyvinylbutyrale werden vorzugsweise mittels thermoplastischer Extrusion durch Breitschlitzdüsen zu vorzugsweise 0,2 bis 2 mm, insbesondere 0,3 bis 0,8 mm, dicken transluzenten Flachfolien extrudiert. Die Extrusionstemperatur der Extrusionsformmassen liegt im üblichen Bereich, vorzugsweise zwischen 140 und 250 °C, kurzzeitig können auch höhere Temperaturen erreicht werden. Die Herstellung von Flachfolien kann auch durch thermoplastische Formung der erfindungsgemäßen plastifizierten PVB-Formmassen auf einem beheizbaren Dreiwalzenstuhl bzw. einem Kalander erfolgen.

Die Extrusionsformmassen können weitere übliche Zusätze enthalten, wie beispielsweise geringe Mengen an Alkali, vorzugsweise 0,001 bis 0,1 Gew.-%, bezogen auf das PVB, Alkalihydroxid oder alkalisch reagierendes Alkalisalz, zur Stabilisierung des PVB-s gegen saure Hydrolyse. Dieser Alkaligehalt wird üblicherweise auch als Alkalititer des PVB-s bezeichnet. Die plastifizierten PVB-Extrusionsformmassen können ferner bekannte Antihaftmittel in üblichen Mengen enthalten, wie beispielsweise Alkalisalze oder Erdalkalisalze von Carbonsäuren, insbesondere Kalium- oder Magnesiumsalze der Ameisensäure oder der Essigsäure, ferner Alkali- oder Erdalkalisalze von gesättigten Dicarbonsäuren oder Magnesiumacetylacetonat sowie verschiedene Silane bzw. Siloxane, beispielsweise 3-(Methyltriethylenglykoxy)-propylsilan-trismethyltriethylenglykolester. Die Einsatzmenge an diesen Antihaftmitteln liegt vorzugsweise im Bereich von 0,001 bis 0,2 Gew.-%, bezogen auf das PVB-/Weichmacher-Gemisch. Weiterhin kann die Formmasse sonstige übliche Lichtstabilisatoren, beispielsweise Benzotriazolderivate, enthalten.

Die durch Extrusion der plastifizierten Polyvinylbutyrale hergestellten erfindungsgemäßen PVB-Verbundfolien werden vorzugsweise als Zwischenlagen bei der Herstellung von Verbundglasscheiben aus anorganischen Glasscheiben eingesetzt, vorzugsweise von Fahrzeugglasscheiben, Schiffsglasscheiben, Flugzeugglasscheiben, Architekturglasscheiben für den Bausektor, Sicherheitsglasscheiben und Panzerglasscheiben. Dabei werden Verbundgläser von hoher Qualität mit deutlich verminderter Gelbfärbung und überraschend vorteilhaften Gebrauchseigenschaften erhalten.

Die Erfindung wird durch die nachstehenden Beispiele näher erläutert.

### Beispiele 1 bis 10

### Herstellung und Ausprüfung von plastifizierten Polyvinylbutyralfolien mit unterschiedlichen Gehalten an optischen Aufhellern

### Beispiel 1 bis 5

### Verwendung von Stilben-Derivaten als optische Aufheller

Es werden in den Beispielen 1 bis 5 jeweils ein PVB mit einem Gehalt an Vinylalkoholmonomereinheiten von 20,5 Gew.-%, bezogen auf das PVB, einem Alkalititer von 15 ml n/100 HCl pro 100 g PVB und einer Viskosität der 5 Gew.-%igen ethanolischen PVB-Lösung bei 23 °C von 61 mPa·s (gemessen nach DIN 53015) mit 26 Gew.-%, bezogen auf das PVB-/Weichmacher-Gemisch, des Weichmachers Triethylenglykoldi-n-heptanoat vermischt und plastifiziert und dabei zusätzlich unterschiedliche Mengen, wie in den Beispielen 1 bis 5, jeweils bezogen auf das PVB-/Weichmacher-Gemisch, angegeben, des handelsüblichen optischen Aufhellers Blankophor PSG (Stilben-Derivat, Hersteller: Fa. Bayer AG) in dem verwendeten Weichmacher gelöst (Beispiele 1 bis 3) bzw. des handelsüblichen optischen Aufhellers Uvitex FP (Stilben-Derivat, Hersteller: Fa. Ciba-Geigy AG) in dem verwendeten Weichmacher suspendiert (Beispiele 4 und 5) eingemischt und die plastifizierte PVB-Masse in einem ®Haake-Zweischnecken-Extruder (Hersteller: Fa. Haake) bei einer Massetemperatur von 200 °C jeweils zu einer 0,8 mm dicken Flachfolie extrudiert. Die Bestimmung der Gelbfärbung der erhaltenen Folien erfolgt im wesentlichen nach der Methode ASTM-D-1925 an silikatischen Verbundgläsern, welche die Folien jeweils als Zwischenschicht enthalten, unter Eliminierung des Folien-freien Glasscheibenfarbwertes. Die resultierende Meßgröße ist der "Yellowness Index: (YI), wobei in den vorliegenden Beispielen der Differenzwert ΔYI angegeben wird, wie er sich aus der Meßgröße für das Verbundglas abzüglich der Meßgröße für die Folien-freien Glasplatten des Verbundglases ergibt. Die Verbundglasherstellung erfolgt nach einer Schnellpress-Labormethode, bei der die Glasplatten mit den Zwischenschichtverbundfolien bei 150 °C mit einer Haltezeit von 3 Minuten bei 12 bar verpreßt werden. Der ermittelte YI-Wert der verwendeten Folien-freien Glasplatten wird vom ermittelten YI-Wert des mit den jeweiligen Folien verpreßten Glasverbundes abgezogen und dabei der jeweils angegebene ΔYI-Wert erhalten.

Die ΔYI-Werte werden mit abnehmender Gelbfärbung bzw. abnehmender Vergilbung der Folien kleiner. Bevorzugt sind ΔYI-Werte von ≦ 2, vorzugsweise von ≦ 1,8.

Es werden in den Beispielen 1 bis 5 folgende ΔYI-Werte erhalten:
- Beispiel 1:: Zusatz von 0,0001 Gew.-% Blankophor PSG
ΔYI = 0,73
- Beispiel 2:: Zusatz von 0,001 Gew.-% Blankophor PSG
ΔYI = 0,63
- Beispiel 3:: Zusatz von 0,01 Gew.-% Blankophor PSG
ΔYI = -0,24
Die in dem Beispiel 3 und in den nachfolgenden Beispielen 5 und 10 resultierenden negativen ΔYI-Werte sind durch zu hohe Konzentrationen an optischen Aufhellern bedingt, was zu einer Überkompensierung des fehlenden Blaulichtanteils und damit zu einer Blaustichigkeit der Folie führt.
- Beispiel 4:: Zusatz von 0,0001 Gew.-% Uvitex FP
ΔYI = 1,69
- Beispiel 5:: Zusatz von 0,001 Gew.-% Uvitex FP
ΔYI = -0,63

### Vergleichsbeispiel 1

Es wird wie in den Beispielen 1 bis 5 beschrieben verfahren mit der Abänderung, daß die plastifizierte PVB-Folie ohne Zusatz eines optischen Aufhellers hergestellt wird.
Der ermittelte ΔYI-Wert beträgt 2,23.

### Beispiel 6 bis 8

### Verwendung eines Benzoxazol-Derivates als optischer Aufheller

Es wird wie in den Beispielen 1 bis 5 beschrieben verfahren mit der Abänderung, daß anstelle von Blankophor PSG bzw. Uvitex FP der optische Aufheller Uvitex OB (Benzoxazol-Derivat, Hersteller: Fa. Ciba-Geigy AG) im Weichmacher gelöst dem Polyvinylbutyral in verschiedenen Mengen beigemischt wird.
Es werden folgende ΔYI-Werte erhalten:
- Beispiel 6:: Zusatz von 0,00005 Gew.-% Uvitex OB
ΔYI = 1,07
- Beispiel 7:: Zusatz von 0,0002 Gew.-% Uvitex OB
ΔYI = 0,84
- Beispiel 8:: Zusatz von 0,001 Gew.-% Uvitex OB
ΔYI = 0,44

### Beispiel 9 und 10

### Verwendung eines optischen Aufhellers zusammen mit einem UV-Absorber

Es wird wie in den Beispielen 6 bis 8 beschrieben verfahren mit der Abänderung, daß zusätzlich zu dem optischen Aufheller Uvitex OB, im Weichmacher gelöst, dem Polyvinylbutyral jeweils noch 0,15 Gew.-%, bezogen auf das PVB-/Weichmacher-Gemisch, des UV-Absorbers ®Tinuvin P (Hersteller: Fa. Ciba-Geigy AG) zugesetzt werden.
Es werden folgende ΔYI-Werte erhalten:
- Beispiel 9:: Zusatz von 0,001 Gew.-% Uvitex OB
ΔYI = 1,05
- Beispiel 10:: Zusatz von 0,01 Gew.-% Uvitex OB
ΔYI = -0,17
Es ist überraschend, daß auch zusammen mit einem üblicherweise verwendeten UV-Absorber, der das vom optischen Aufheller für seine Wirksamkeit benötigte UV-Licht absorbieren kann, eine deutliche Reduzierung der Gelbfärbung in der Folie resultiert.

## Patentansprüche

1. Plastifizierte Polyvinylbutyralfolien mit verbesserten optischen Eigenschaften und verminderter Gelbfärbung aus Weichmacher-haltigen Polyvinylbutyralen (PVB-en), die eine wirksame Menge an optischen Aufhellern enthalten und die gegebenenfalls zusätzlich Oxidationsstabilisatoren, Lichtstabilisatoren, Antihaftmittel und Hydrolyseinhibitoren enthalten.

2. Plastifizierte Polyvinylbutyralfolien nach Anspruch 1, dadurch gekennzeichnet, daß sie 0,00001 bis 0,1 Gew.-%, bezogen auf das PVB-/Weichmachergemisch, optische Aufheller enthalten.

3. Plastifizierte Polyvinylbutyralfolien nach Anspruch 1, dadurch gekennzeichnet, daß sie optische Aufheller aus der Gruppe der Stilbenderivate und der Benzoxazolderivate enthalten.

4. Plastifizierte Polyvinylbutyralfolien nach Anspruch 1, dadurch gekennzeichnet, daß sie 20 bis 50 Gew.-%, bezogen auf das PVB/Weichmacher-Gemisch, Weichmacher enthalten.

5. Plastifizierte Polyvinylbutyralfolien nach Anspruch 1, dadurch gekennzeichnet, daß das PVB einen Gehalt an Vinylalkoholmonomereinheiten von 17 bis 29 Gew.-%, bezogen auf das PVB, besitzt.

6. Plastifizierte Polyvinylbutyralfolien nach Anspruch 1, dadurch gekennzeichnet, daß sie als Flachfolien mit einer Dicke von 0,2 bis 2 mm, vorliegen.

7. Verfahren zur Herstellung von optische Aufheller enthaltenden plastifizierten Polyvinylbutyralfolien nach Anspruch 1 durch Vermischen von PVB und Weichmacher und gegebenenfalls weiteren Zusatzstoffen und Hilfsmitteln, Plastifizieren des Gemisches und thermoplastische Formung, vorzugsweise durch Extrusion oder Kalandrierung, dadurch gekennzeichnet, daß man die optischen Aufheller vor dem Vermischen von PVB und Weichmacher in dem Weichmacher löst oder suspendiert.

8. Verwendung von plastifizierten Polyvinylbutyralfolien nach Anspruch 1 als Zwischenlagenfolien bei der Herstellung von Mehrschicht-Verbundglasscheiben, vorzugsweise silikatischen Scheiben, vorzugsweise in Form von Fahrzeugglasscheiben, Schiffsglasscheiben, Flugzeugglasscheiben, Architekturglasscheiben für den Bausektor, Sicherheitsglasscheiben und Panzerglasscheiben.
